# FASCICULE DE BREVET EUROPEEN

(11) **EP 3 075 220 B1**
(45) Date de publication et mention de la délivrance du brevet: **01.05.2024**
(21) Numéro de dépôt: 16162569.4
(22) Date de dépôt: 29.03.2016
(51) Int. Cl.: A01B 29/04

(54) **PNEUMATIQUE POUR ROULEAU AGRICOLE ET ROULEAU AGRICOLE EQUIPE DE TELS PNEUMATIQUES**
REIFEN FÜR ACKERWALZE, UND MIT EINEM SOLCHEN REIFEN AUSGESTATTETE ACKERWALZE
TYRE FOR AGRICULTURAL ROLLER AND AGRICULTURAL ROLLER PROVIDED WITH SUCH TYRES

(30) Priorité: 30.03.2015 FR 1552687
(43) Date de publication de la demande: 05.10.2016
(73) Titulaire: OTICO, 77650 Chalmaison (FR)
(72) Inventeur: PHELY, Olivier, 77520 Thénisy (FR)
(74) Mandataire: Cabinet Netter

(56) Documents cités:
- EP-A1- 2 556 734
- EP-A2- 2 436 249
- FR-A1- 2 763 279
- FR-A1- 2 841 733
- FR-A1- 2 917 569

## Description

L'invention concerne un outil agricole à usage pour travailler des champs et y former des sillons.

Pour former des sillons dans des champs de terre, on utilise généralement un rouleau allongé que l'on déplace à travers champ. Un tel outil est parfois désigné « rouleau sillonneur » dans la technique. Le rouleau comprend un support cylindrique allongé et plusieurs pneumatiques montés les uns à côté des autres sur le support, chaque pneumatique travaillant dans un sillon respectif.

Chaque pneumatique comprend classiquement une partie formant semelle, par l'intermédiaire de laquelle le pneumatique se monte sur le support cylindrique, une partie formant bande de roulement, par l'intermédiaire de laquelle le pneumatique est en contact avec le fond du sillon et deux parties formant des flancs reliant chacun la bande de roulement à la semelle.

Les pneumatiques sont suffisamment rigides pour appuyer le sol, au fond des sillons notamment. Les pneumatiques s'encrassent en fonctionnement : de la terre notamment vient régulièrement coller sur les pneumatiques. Pour réduire l'encrassement des pneumatiques et, le cas échéant, faciliter leur nettoyage, on a pris l'habitude d'utiliser des pneumatiques conformés d'une manière telle qu'ils se déforment suffisamment en roulant. La semelle, la bande de roulement et les flancs forment conjointement une enveloppe creuse du pneumatique, et l'intérieur de cette enveloppe communique fluidiquement avec l'extérieur du pneumatique. Lorsque le pneumatique roule, son enveloppe se déforme.

Dans FR 2 997 653 par exemple, la Demanderesse a proposé un rouleau sillonneur comprenant des pneumatiques à déformation contrôlée. Les flancs de ces pneumatiques présentent des zones d'affaiblissement ou d'inflexion qui provoquent l'affaissement du pneumatique en roulement : les flancs s'effacent vers l'intérieur du pneumatique tandis que la bande de roulement se rapproche de la semelle. Ces rouleaux donnent globalement satisfaction. Ils permettent de travailler efficacement dans les sillons tout en présentant des capacités de nettoyage grandement améliorées, au point qu'il est possible, dans la plupart des conditions d'utilisation, de se passer d'outils de nettoyage spécifiques, tels que des grattoirs ou décrottoirs.

Le document FR 2 841 733 divulgue également un rouleau sillonneur de l'art antérieur.

La Demanderesse a constaté que la plupart des rouleaux sillonneurs actuels, qui comprennent des pneumatiques à enveloppe déformable, peuvent, au moins dans des conditions de travail assez particulières, se détériorer précocement. La disposition des pneumatiques sur le support se trouve parfois modifiée, en particulier à la suite d'un virage ou d'une vitesse élevée. Les rouleaux perdent de leur efficacité, en particulier du fait que les outils de nettoyage, configurés pour agir entre les pneumatiques, ne peuvent plus agir. Il arrive également que les pneumatiques eux-mêmes s'usent prématurément. L'invention vise à améliorer la situation.

La Demanderesse propose à cet effet un outil agricole à usage pour former des sillons tel que défini dans la revendication 1.

L'outil proposé conserve son efficacité plus longuement que les outils classiques. En particulier, il est moins sujet au décalage des pneumatiques sur le support. L'enveloppe du pneumatique se déforme d'une manière qui permet son nettoyage automatique. La déformation de cette enveloppe est telle qu'elle contribue au serrage de ce pneumatique contre les pneumatiques voisins. Cela réduit considérablement le risque de déplacement des pneumatiques sur support, et empêche la survenue de phénomènes qui détériorent et encrassent les pneumatiques.

La droite passant par le sommet de la bande de roulement et par le point de jonction entre le flanc et la semelle, et qui croise la surface latérale de la semelle, présente une inclinaison qui correspond sensiblement à l'inclinaison des flancs. Une telle droite représente sensiblement la transmission des efforts de la forme bombée de la bande de roulement jusqu'à la semelle. En vérifiant que la surface latérale de la semelle est sensiblement dans l'alignement des flancs, on s'assure de limiter les effets de cisaillement qui pourraient, sinon, apparaître et au moins en partie neutraliser la sollicitation de la semelle axialement vers l'extérieur générée par la déformation de l'enveloppe.

Comme chacun des flancs présente une courbure de signe constant depuis la bande de roulement jusqu'à la semelle, la courbure, si elle existe, reste positive ou reste négative sur tout le flanc. Autrement dit, le flanc est soit de profil plan, soit seulement concave, soit seulement convexe. Il ne peut présenter une partie concave et une partie convexe. Le flanc est donc dépourvu de point d'inflexion, ce qui nuirait à la transmission des efforts depuis la forme bombée jusqu'à la semelle et favoriserait au contraire une déformation de l'enveloppe dans laquelle les flancs tendent à s'effacer ou à se replier sur eux-mêmes.

L'outil peut présenter les caractéristiques optionnelles suivantes, seules ou en combinaison les unes avec les autres :
- L'un au moins des flancs présente en outre une forme généralement concave et parabolique. Autrement dit, vu de profil, une tangente au flanc voit son inclinaison par rapport à la direction radiale augmenter de manière régulière depuis la bande de roulement jusqu'à la semelle. Un tel flanc travaillant en compression selon sa direction principale tend alors à présenter un fléchissement orienté vers l'intérieur du pneumatique limité. Le risque d'un pliage ou de l'effacement du flanc en fonctionnement est réduit. La composante axiale de la sollicitation de la semelle vers l'extérieur générée par la déformation de l'enveloppe est alors plus importante.
- Le pneumatique comprend en outre au moins une armature logée dans la semelle, à proximité d'une jonction avec un flanc. L'extrémité axiale du pneumatique est ainsi rigidifiée. Le risque d'écartement ou de perte de serrage involontaires entre le pneumatique et une face d'appui en fonctionnement est réduit.
- Le pneumatique présente une hauteur de travail supérieure à 28 % de la largeur du pneumatique. Une telle hauteur de travail permet, en fonction de l'inter-rang souhaité, de travailler dans des sillons à forte profondeur sans dégrader les contours des sillons.
- L'un au moins des flancs se raccorde à la semelle par l'intermédiaire d'un épaulement. L'épaulement forme une surface de contact avec le sol en fonctionnement tout en présentant une faible déformation, ce qui améliore la tenue du pneumatique autour du support et sa bonne indexation selon la direction axiale par rapport aux autres pneumatiques. En outre, à l'état installé de deux pneumatiques adjacents, les bandes de roulement de chacun des pneumatiques adjacents se raccordent l'une à l'autre de manière sensiblement continue. Une zone de raccordement sensiblement continue est moins sujette à l'accumulation de débris. Les risque de pénétration de débris entre deux pneumatiques et de détérioration est réduit.
- La droite croise la surface latérale de la semelle en une portion de la semelle correspondant à une demi-épaisseur radialement extérieure de la semelle. Ainsi, qu'au moins la partie radialement extérieure de la semelle est sollicitée axialement vers l'extérieur sous l'effet de la déformation de l'enveloppe. En fonctionnement, cette partie qui vient au contact du sol et est donc plus sujette à des chocs et des débris est alors particulièrement sollicitée latéralement vers l'extérieur, ce qui améliore le serrage contre la face d'appui correspondante.
- La forme bombée de la bande de roulement et l'inclinaison des flancs sont telles que la portion de la droite s'étendant entre le sommet de la bande de roulement et la jonction entre un flanc et la semelle reste comprise dans l'épaisseur dudit flanc.

Selon un autre aspect de l'invention, la Demanderesse propose un pneumatique tel que défini dans la revendication 8.

La Demanderesse propose également un kit tel que défini dans la revendication 9.

La présente invention sera mieux comprise à la lecture de la description détaillée de quelques modes de réalisations pris à titre d'exemples nullement limitatifs et illustrés par les dessins annexés sur lesquels :
- la figure 1 montre une vue partiellement éclatée et en perspective d'un outil selon l'invention ;
- la figure 2 montre une vue partielle et en coupe de l'outil de la figure 1 ;
- la figure 3 montre une vue partiellement en coupe d'un pneumatique équipant l'outil de la figure 1 ;
- la figure 4 montre le profil en coupe du pneumatique de la figure 3 ;
- la figure 5 montre une vue en perspective d'un outil selon l'invention ;
- la figure 6 montre une vue de face de l'outil de la figure 5 ;
- la figure 7 montre une vue de côté de l'outil de la figure 5 ;
- la figure 8 montre une vue en coupe transversale selon la droite VIII-VIII de la figure 7;
- la figure 9 montre le profil en coupe transversale de l'outil de la figure 8 ;
- les figures 10 à 15 montrent des profils vus en coupe transversale de modes de réalisation d'outils selon l'invention ;
- les figures 16 et 17 représentent des profils à bande de roulement respectivement convexe et concave ; et
- la figure 18 représente une variante du profil de la figure 17.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant. Il est relevé que des éléments comme la géométrie de profil de pneumatiques sont difficiles à définir complètement, autrement que par le dessin.

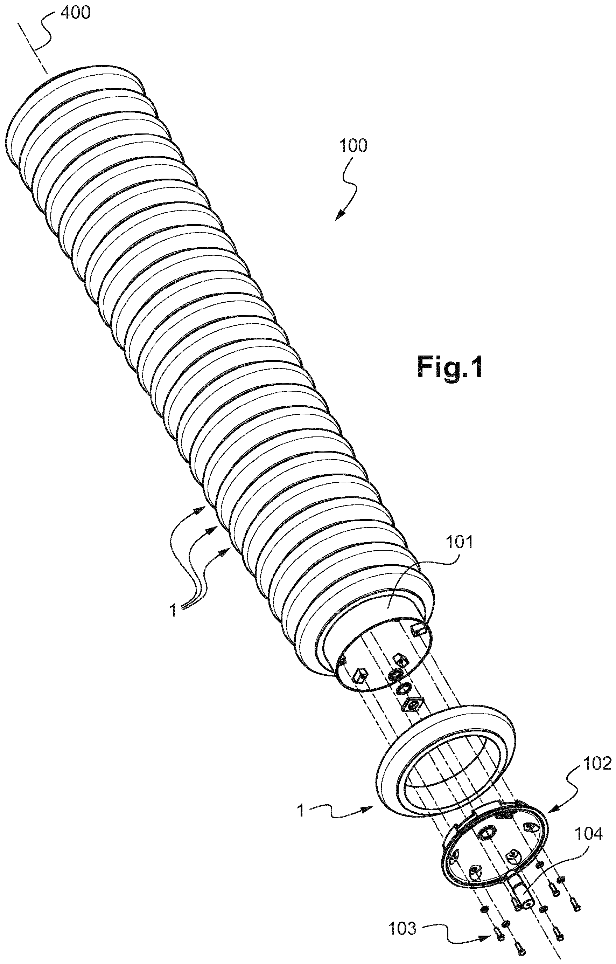

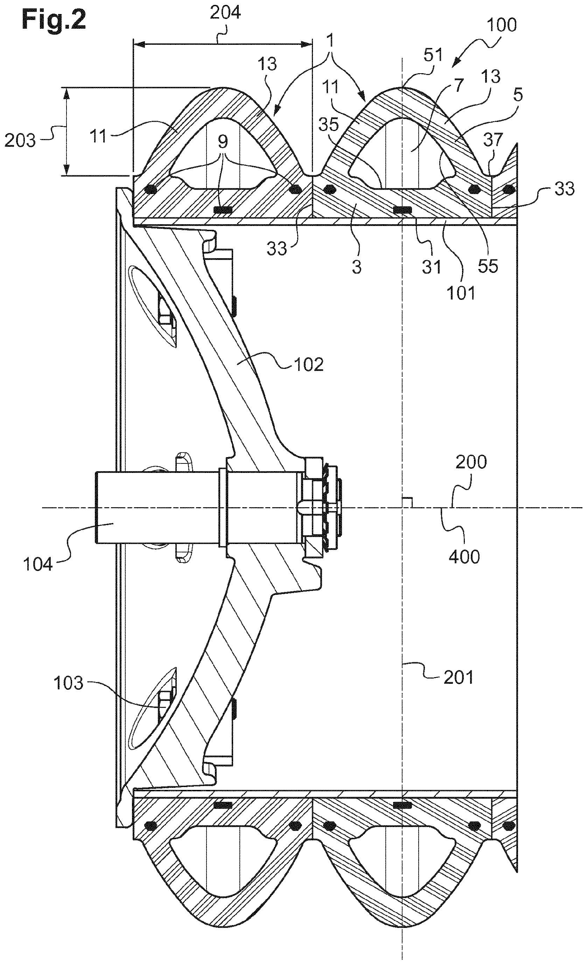

Il est fait référence aux figures 1 et 2.

Elles montrent un rouleau agricole 100 pour la formation de sillons. Le rouleau 100 correspond à ce que l'on appelle un rouleau sillonneur dans la technique. Le rouleau présente une allure générale de cylindre allongé. Le rouleau 100 comprend un support généralement cylindrique 101 allongé avec un axe longitudinal 400 et une pluralité de pneumatiques 1 montée autour du support 101. Les pneumatiques 1 sont disposés les uns à côté des autres selon la direction longitudinale du support 101. Les pneumatiques 1 sont répartis longitudinalement d'une manière qui correspond à ce que l'on appelle l'entre-rang dans la technique, c'est-à-dire l'écartement entre deux sillons adjacents. Ici, les pneumatiques sont au contact les uns des autres.

Les pneumatiques 1 sont serrés axialement, dans la direction longitudinale du rouleau 100. Ici, le rouleau 100 comprend en outre deux flasques 102 fixés chacun à une extrémité longitudinale du support 101, ici au moyens de vis 103. Le serrage axial des pneumatiques 1 est maintenu par les flasques 102. Les flasques 102 peuvent être vus comme des joues du support 101.

Le rouleau 100 est destiné à être monté à rotation autour de l'axe longitudinal 400, par exemple sur le châssis d'une machine agricole. Chaque flasque 102 supporte ici un axe d'essieu 104 destiné à être reçu dans un palier. L'axe d'essieu 104 peut être vu comme un demi-essieu.

Chaque pneumatique 1 présente une forme généralement annulaire avec un axe central 200. Chaque pneumatique 1 présente un plan médian 201 perpendiculaire à l'axe central 200. À l'état monté, l'axe central 200 de chaque pneumatique 1 est sensiblement confondu avec l'axe longitudinal 400 du support 101.

Ici, pour chaque pneumatique 1, le plan médian 201 correspond à un plan de symétrie.

Les pneumatiques 1 sont contraints selon la direction longitudinale du support 101. À l'état monté, la largeur d'un pneumatique 1 est inférieure à la largeur du pneumatique 1 à l'état libre, par exemple d'environ 5 %. Dans l'exemple décrit ici, la largeur 204 à l'état installé du pneumatique 1 est d'environ 125 millimètres tandis que la largeur au repos de ce pneumatique 1 est d'environ 131 millimètres. Les flasques 102 maintiennent cet état de contrainte à la fin du montage et en fonctionnement. L'état de contrainte des pneumatiques 1 est sensiblement homogène sur la largeur du rouleau 100.

Ici, les pneumatiques 1 sont en contact les uns contre les autres. Les pneumatiques 1 sont montés de manière jointive. En variante, une ou plusieurs entretoises peuvent être intercalées entre pneumatiques voisins. Ceci permet de modifier l'écartement mutuel des pneumatiques en correspondance d'un entre-rang. Dans ce cas, ces pneumatiques sont en appui l'un contre l'autre par l'intermédiaire des entretoises. De telles entretoises peuvent être montées libres autour du support 101 pour faciliter le montage.

Certaines au moins des entretoises peuvent être solidaires du support 101. Les entretoises agissent alors comme des butées entre des pneumatiques.

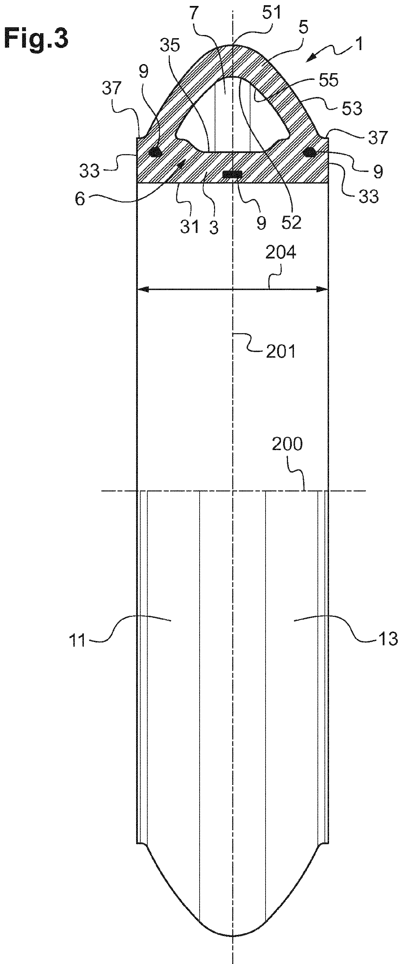

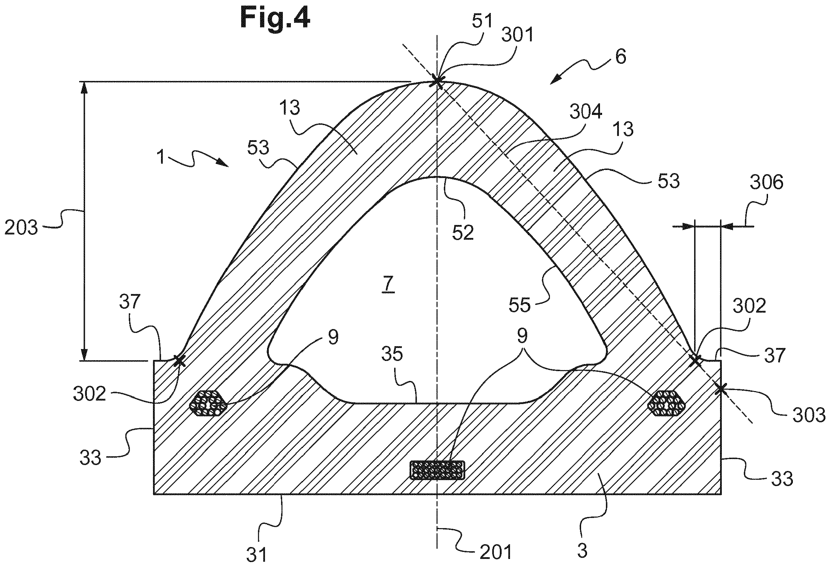

On fait référence aux figures 3 et 4. La figure 4 montre un profil du pneumatique 1 correspondant à une coupe selon un plan radial.

Le pneumatique 1 comprend une partie formant semelle 3, une partie formant bande de roulement 5 et deux parties formant flancs 11 et 13 qui relient chacun la bande de roulement 5 à la semelle 3. La semelle 3 et la bande de roulement 5 présentent chacune une forme généralement annulaire. Lorsque l'outil travaille, la bande de roulement 5 vient rouler sur le fond d'un sillon.

La semelle 3, la bande de roulement 5 et les flancs 11, 13 forment conjointement une enveloppe 6 du pneumatique 1 autour d'une chambre 7. L'enveloppe 6 est uniforme sur la circonférence du pneumatique 1.

Le pneumatique 1 est de type semi-creux. La chambre 7 communique fluidiquement avec l'extérieur du pneumatique 1. L'enveloppe 6 est libre de se déformer lorsque le pneumatique 1 roule. Cette déformation provoque le décollage de la terre qui tend à s'accrocher au pneumatique 1.

Le pneumatique 1 se monte sur un support généralement cylindrique par la semelle 3, par exemple le support 101 décrit en relation avec les figures 1 et 2.

La semelle 3 présente une surface de siège 31 de forme correspondant à une surface extérieure du support et deux surfaces latérales 33 destinées à venir chacune au contact d'une surface d'appui. Cette surface d'appui peut être :
- une face latérale d'un pneumatique 1 monté de manière adjacente sur le support,
- une face d'une entretoise montée de manière adjacente sur le support,
- une face d'un flasque, par exemple l'un des flasques 102 décrits en relation avec les figures 1 et 2.

Ici les surfaces latérales 33 sont sensiblement planes. Les surfaces latérales 33 s'étendent sensiblement parallèlement au plan médian 201. En variante, les surfaces latérales 33 peuvent être tronconiques.

La semelle 3 présente une surface intérieure 35 opposée à la surface de siège 31. La surface intérieure 35 s'étend sensiblement entre les flancs 11, 13.

La bande de roulement 5 présente une surface intérieure 52 dirigée vers la chambre 7 et une surface extérieure 51 opposée à la surface intérieure 52. La surface intérieure 52 de la bande de roulement 5 se trouve en regard de la surface intérieure 35 de la semelle 3. La surface extérieure 51 de la bande de roulement 5 est dirigée vers l'extérieur du pneumatique 1.

La bande de roulement 5 est généralement bombée, par exemple en forme de dôme ou d'ogive. La surface extérieure 51 de la bande de roulement 5 présente une ligne de crête qui correspond à un sommet dans le profil de cette surface. La ligne de crête est sensiblement contenue dans le plan médian 201. Cette ligne de crête forme l'extrémité radiale du pneumatique 1. La forme bombée de la bande de roulement 5 limite la déformation de l'enveloppe du pneumatique. Elle empêche l'affaissement de la bande de roulement 5.

Ici, le profil de la surface extérieure 51 présente un unique sommet.

Chaque flanc 11, 13 se raccorde à la semelle 3 au voisinage de l'une ou l'autre des surfaces latérales 33. Chaque flanc 11, 13 présente une surface intérieure 55 dirigée vers la chambre 7 et une surface extérieure 53 opposée à la surface intérieure 55.

Les flancs 11, 13 s'étendent généralement de manière radialement inclinée. Une distance séparant les flancs 11, 13 l'un de l'autre augmente depuis la bande de roulement 5 vers la semelle 3. Autrement dit, les flancs 11 et 13 se rapprochent l'un de l'autre en direction de la bande de roulement 5. Ici, chaque flanc 11, 13 est incliné d'un angle compris entre 4,5° et 60° avec la direction radiale, et de préférence entre 25° et 35°.

Les flancs 11, 13 forment un angle aigu avec la semelle 3.

En fonctionnement, l'enveloppe 6 se déforme de manière telle que les surfaces latérales 33 de la semelle 3 se trouvent poussées vers l'extérieur. Les surfaces latérales 33 sont sollicitées vers leur surface d'appui correspondante, par exemple vers la face latérale d'un pneumatique 1 adjacent du rouleau 100. Il en résulte un serrage supplémentaire, en fonctionnement, de chaque surface latérale 33 contre une face d'appui adjacente qui évite l'insertion de débris entre la surface latérale 33 et la face d'appui correspondante. La tenue du rouleau sillonneur équipé d'un tel pneumatique, par exemple le rouleau 100 décrit plus haut, s'en trouve améliorée. Le rouleau sillonneur s'use moins vite et présente donc une durée de vie allongée.

Les flancs 11, 13 transmettent des efforts de la bande roulement 5 à la semelle 3. La configuration particulière dans laquelle la bande de roulement 5 est bombée et les flancs 11, 13 inclinés génère des efforts dans la semelle 3 qui présentent une composante axiale dirigée vers l'extérieur du pneumatique 1.

La forme bombée de la bande de roulement 5 contribue à la transmission aux flancs 11 et 13 des efforts que subit cette bande de roulement 5. Les flancs inclinés 11 et 13 travaillent au moins en partie en compression. En fonctionnement, ils conservent la direction principale qu'ils avaient au repos. La configuration bombée de la bande de roulement 5 et la configuration inclinée des flancs 11, 13 coopèrent de sorte que la déformation de l'enveloppe 6 comprenne une expansion axiale de la semelle 3 résultant d'un déplacement radial de la bande de roulement 5 vers la semelle 3. La bande de roulement 5 se déforme peu. Les flancs 11, 13 se déforment pour faciliter le nettoyage. La semelle 3 tend à s'expandre latéralement vers l'extérieur. À l'état bloqué entre deux faces d'appuis, cette tendance à l'expansion axiale résulte en un meilleur appui axial contre les faces d'appui.

L'enveloppe 6 peut être vue comme présentant une section de forme générale trapézoïdale isocèle dans laquelle la bande de roulement 5, bombée vers l'extérieure, correspond à la petite base.

La bande de roulement 5 et les flancs 11, 13 présentent des épaisseurs sensiblement égales les unes aux autres. Vue en coupe radiale, l'enveloppe 6 présente une épaisseur sensiblement constante et des surfaces sensiblement régulières depuis la liaison entre le premier flanc 11 et la semelle 3 jusqu'à la liaison entre le second flanc 13 et la semelle 3 en passant par la bande de roulement 5. Ceci limite les risques d'apparition de zones de concentration de contrainte et d'amorce de pliage.

On fait référence à la partie de la figure 4 qui se trouve à droite du plan médian 201. La partie gauche se déduit de la partie de droite par symétrie par rapport au plan médian 201.

La surface extérieure 53 du flanc 13 est reliée à la surface latérale 33 de la semelle 3 par une surface en forme d'épaulement 37. La surface d'épaulement 37 correspond à une surface extérieure de la semelle 3.

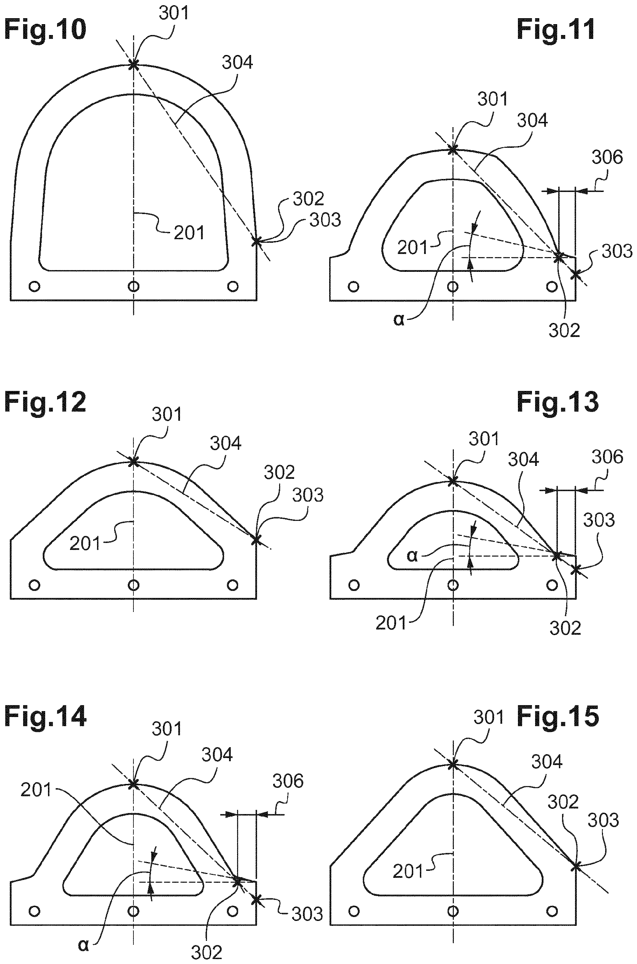

La surface d'épaulement 37 est cylindrique autour de l'axe central 200. La surface d'épaulement 37 est sensiblement perpendiculaire à la face latérale 33. La surface d'épaulement 37 forme un angle obtus avec la surface extérieure 53 du flanc 13. En variante, la surface d'épaulement 37 peut être tronconique. L'angle entre la surface d'épaulement 37 et la face latérale 33 peut être obtus. La surface d'épaulement 37 forme alors un demi-angle au sommet avec l'axe central 200, angle référencé α sur les figures 11, 13 et 14.

La surface extérieure 53 du flanc 13 est reliée à la surface d'épaulement 37 par une partie de jonction 52. Ici, la jonction 52, de forme concave, forme un congé de raccordement. Ce congé de raccordement évite une concentration de contrainte et empêche que les flancs ne plient en fonctionnement. Le congé de raccordement facilite également l'évacuation de la terre et évite l'accumulation de débris.

Ici, la surface d'épaulement 37 et la surface latérale 33 se raccordent l'une à l'autre en une arête vive. Ceci empêche une accumulation de débris entre la surface latérale 33 et la face d'appui correspondante, en particulier la surface latérale d'un pneumatique adjacent. Cette configuration en arête vive est d'autant plus efficace que la surface d'épaulement 37 est peu inclinée, voire cylindrique, c'est-à-dire un angle α voisin de 0°.

Ici, la largeur 306 de la surface d'épaulement 37, c'est-à-dire son étendue selon la direction longitudinale, est inférieure à la moitié de la dimension radiale de la surface d'appui 33. La dimension radiale de la surface d'appui 33 est, ici, comprise entre 30 et 40 millimètres.

Les figures 10, 12 et 15 montrent un pneumatique 1 dépourvu de surface d'épaulement 37. La surface extérieure 53 du flanc 13 et la surface latérale 33 de la semelle 3 sont ici reliées l'une à l'autre en une arête vive. Ceci diminue le risque d'accumulation de débris.

Dans les exemples décrits ici, l'enveloppe 6 du pneumatique 1 est réalisée d'un seul tenant. L'enveloppe 6 est réalisée à base d'élastomère, par exemple du caoutchouc ou du polyuréthane. La semelle 3, la bande de roulement 5 et les flancs 11, 13 sont réalisés à base d'un unique élastomère. L'élastomère présente une dureté shore A comprise entre 43 et 75.

Dans les exemples décrits ici, le pneumatique 1 comprend en outre des armatures 9, ou renforts, ici au nombre de trois. Les armatures 9 sont formées d'anneaux métalliques noyés dans la semelle 3. Les anneaux sont obtenus en regroupant des fils métalliques en faisceaux. Les armatures 9 peuvent être vues comme des joncs ou des tringles annulaires qui s'étendant circonférentiellement dans la semelle 3. Une armature 9 centrale, appartenant au plan médian 201, est disposée dans la demi-épaisseur radialement intérieure de la semelle 3, c'est-à-dire à proximité de la surface de siège 31. Deux armatures 9 latérales sont disposées dans la demi-épaisseur radialement extérieure de la semelle 3, au voisinage de chacune des surfaces d'appui 33. Les armatures 9 latérales sont symétriques l'une de l'autre par rapport au plan médian 201. L'armature 9 centrale présente une section sensiblement rectangulaire et allongée selon la direction axiale. Les armatures 9 latérales présentent chacune une section transversale sensiblement circulaire. Ici, les armatures 9 sont issues du recyclage de tringles métalliques utilisées dans les pneumatiques du domaine automobile.

Les armatures 9 latérales sont disposées à proximité de la surface latérale 33, et de la surface d'épaulement 37 ou de la surface extérieure 53 du flanc 11. Cette disposition des armatures 9 réduit encore les risques que des débris ne s'insèrent près de la surface latérale 33 de la semelle 3.

On fait référence à la figure 4, qui montre un profil du pneumatique 1.

Un premier point correspond au sommet 301, c'est-à-dire à l'extrémité radiale de la bande de roulement 5. Le sommet 301 correspond au point du profil le plus éloigné de l'axe central 200. Dans l'exemple décrit ici, le sommet 301 appartient au plan médian 201. Le sommet 301 appartient également à la surface extérieure 51.

Un second point correspond à un point de jonction 302 entre le flanc 13 et la semelle 3. Le point de jonction 302 se situe en une position radiale correspondant à celle de l'extrémité radiale de la surface d'appui 33. La position du point de jonction 302 est indépendante de la présence ou de l'absence de congé de raccordement entre la surface extérieure 53 du flanc 13 et la surface d'appui 33 de la semelle 3. Ici, le point de jonction 302 correspond au croisement entre la surface extérieure 53 du flanc 13 et la surface d'épaulement 37 de la semelle 3, hors congé de raccordement.

Une droite 304 passant par le sommet 301 et le point de jonction 302 coupe la surface latérale 33 en un troisième point 303. Le point de croisement 303 est situé, ici, dans la demi-épaisseur radialement extérieure de la semelle 3.

La distance radiale séparant une extrémité radiale de la bande de roulement 5 et la semelle 3 correspond à une hauteur 203 de travail du pneumatique 1. La hauteur 203 de travail correspond à la distance, dans la direction radiale, qui sépare le sommet 301 et le point de jonction 302. Dit autrement, la hauteur 203 de travail correspond ici à la hauteur totale du profil tel que représenté en figure 4 à laquelle on retranche l'épaisseur de la semelle 3 en son extrémité axiale. La hauteur 203 de travail est, ici, supérieure à 28 % de la largeur 204 du pneumatique 1, soit ici supérieure à 35 millimètres. Il a en effet été constaté qu'un pneumatique 1 respectant un tel rapport entre la hauteur 203 de travail et la largeur 204 permet de travailler la terre en profondeur. Par exemple, un outil équipé de tels pneumatiques peut venir travailler la terre à la suite d'un disque et/ou de dents. Dans ce cas, la terre est d'abord ameublie par le disque et/ou les dents, puis les pneumatiques viennent fixer la forme des sillons et en consolider les parois et le fond. Un tel traitement permet de piéger l'humidité de la terre et d'éviter qu'elle ne sèche trop rapidement sous l'effet du vent. La dégradation des sillons par des phénomènes d'érosion sont également amoindris. Cela permet également de favoriser la germination rapide des mauvaises herbes. Ainsi, en travaillant la terre une deuxième fois, par exemple avec les mêmes outils, quelques jours après, par exemple deux semaines après, les mauvaises herbes sont facilement éliminées de manière mécanique. L'utilisation de moyens chimiques peut être évitée, ou du moins réduite.

La réaction du sol sur le pneumatique 1 est principalement perpendiculaire à l'axe central 200. La réaction du sol s'exerce au sommet 301 du profil.

Il en résulte une déformation de l'enveloppe 6 du pneumatique 1. Cette déformation facilite le décollage de la terre qui tend à s'attacher aux surfaces extérieures.

La réaction du sol est au moins partiellement transmise à la semelle 3 par les flancs 11, 13. La Demanderesse a constaté qu'en réalisant un pneumatique 1 présentant un profil pour lequel la droite 304 croise la surface d'appui 33 (le point de croisement 303) dans la demi-épaisseur radialement extérieur de la semelle 3, la réaction du sol appliquée au sommet 301 correspond à un effort en la surface latérale 33, au point de croisement 303, comprenant une composante axiale dirigée vers l'extérieur du pneumatique 1.

Cette configuration du pneumatique 1 permet donc de générer une force de serrage de la surface d'appui 33 du pneumatique 1 contre la face d'appui correspondante de l'outil 100, par exemple la face homologue du pneumatique adjacent, force de serrage qui résulte de la réaction du sol.

Une telle configuration distingue notamment le pneumatique 1 des pneumatiques connus, en particulier de ceux dont le profil comprend des points d'inflexion pour privilégier la déformation et l'effacement des flancs par un pliage sur eux-mêmes.

Dans le cas d'un rouleau comprenant des pneumatiques jointifs, l'effort au point de croisement 303 améliore le serrage entre deux pneumatiques adjacents. Il en résulte une contrainte additionnelle par rapport aux contraintes résultant du montage axialement serré des pneumatiques autour du support 101. Le serrage des faces latérales de deux pneumatiques adjacents est amélioré. Le risque que des débris s'insèrent entre les faces latérales de deux pneumatiques 1 adjacents est réduit. Des outils, tels que des rouleaux 100, équipés de tels pneumatiques 1 présentent une durée de vie augmentée par rapport aux outils connus.

Dans les exemples décrits jusqu'ici, le pneumatique 1 présente un profil sensiblement uniforme le long de sa circonférence.

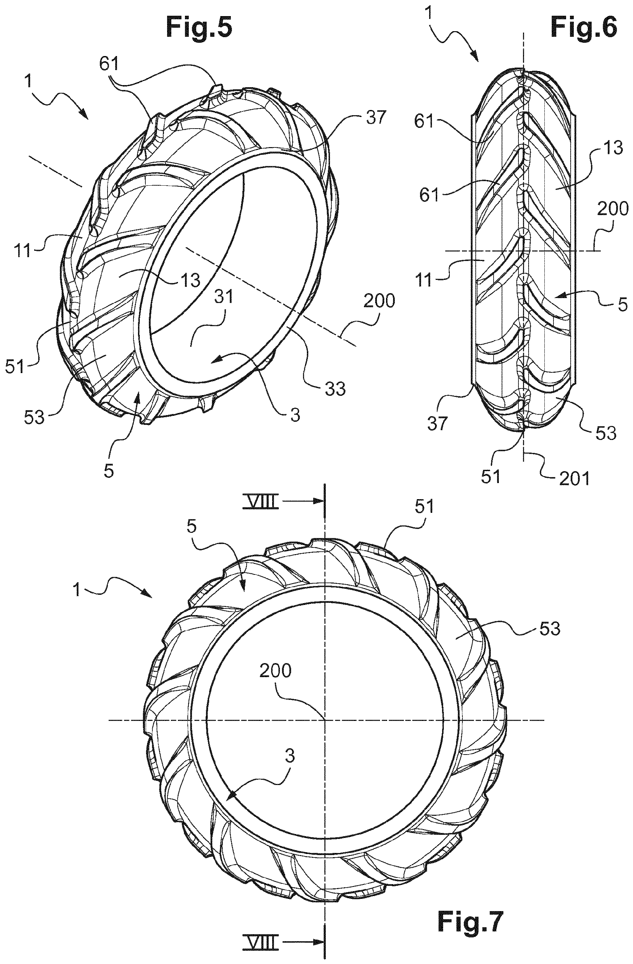

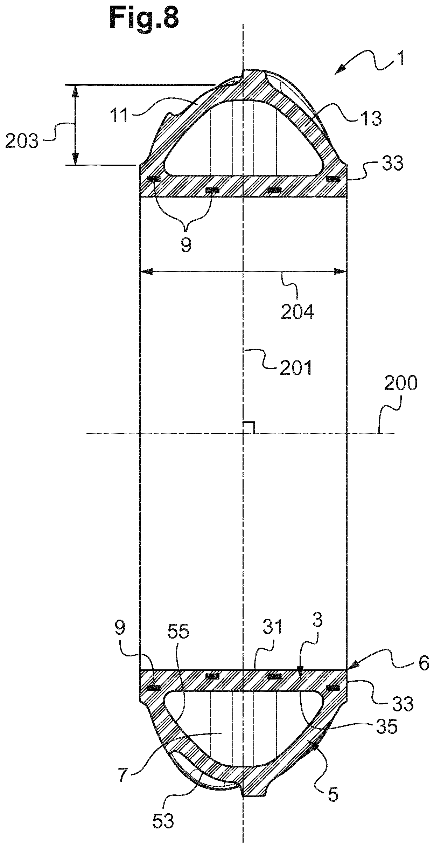

On fait référence aux figures 5 à 9. Les éléments similaires à ceux des modes de réalisation décrits ci-avant portent les mêmes références numériques.

Les figures 5 à 9 montrent un pneumatique 1 analogue au pneumatique 1 des figures 1 à 4 à l'exception du profil non uniforme le long de la circonférence. Le pneumatique 1 comprend des crampons 61 faisant saillie des surfaces extérieures 51 et 53 de la bande de roulement 5 et des flancs 11, 13. Des empreintes peuvent être ménagées en remplacement de certains au moins des crampons 61. Les crampons 61 et les empreintes améliorent l'adhérence du pneumatique 1.

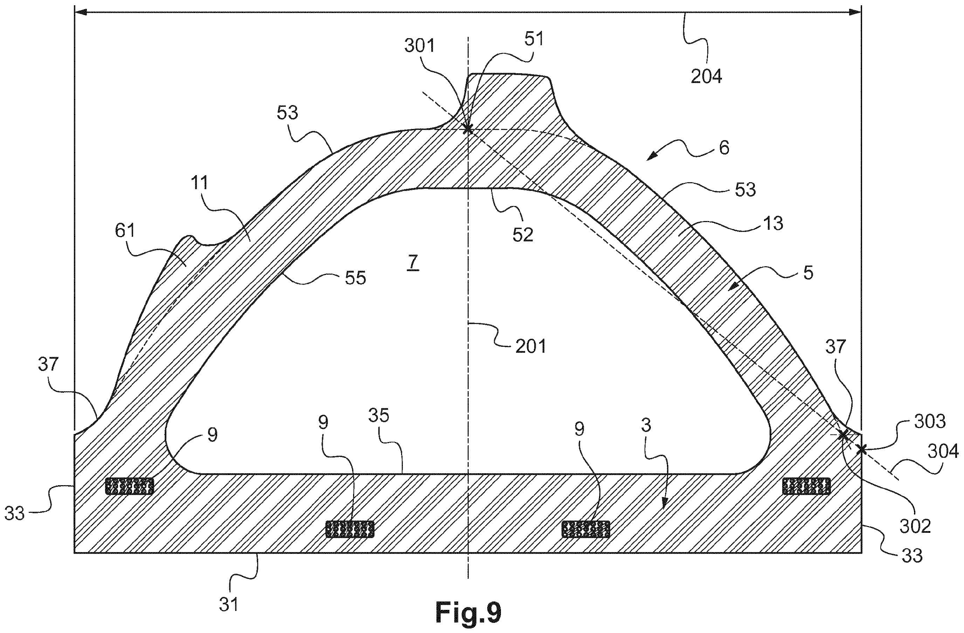

Les effets des crampons 61 ou des sculptures sur la déformation de l'enveloppe 6 du pneumatique 1 sont négligeables. La description relative au profil du pneumatique 1 des figures 1 à 4 est transposable au mode de réalisation des figures 5 à 9. Les crampons 61 et les empreintes ne sont pas pris en considération pour déterminer la position du sommet 301, du point de jonction 302 et du point de croisement 303 entre la droite 304 et la surface latérale 33. Comme cela apparaît en figure 9 par exemple, le sommet 301 est localisé sur le sommet de la bande de roulement 5, c'est-à-dire le point du profil le plus éloigné de l'axe central 200, le crampon 61 étant ignoré.

Les figures 10 à 15 représentent chacun un profil de pneumatique 1 sur lequel le sommet 301, le point de jonction 302 et le point de croisement 303 ainsi que la droite 304 sont représentés. Les figures 10, 12 et 15 représentent des pneumatiques 1 sans surface d'épaulement 37. Lorsque la surface d'épaulement 37 est absente, le point de jonction 302 et le point de croisement 303 sont confondus. En figure 10, la forme bombée vue en coupe de la bande de roulement 5 est sensiblement semi-circulaire. Les flancs 11, 13 sont inclinés par rapport à une direction radiale d'un angle faible, soit ici environ 4,5°.

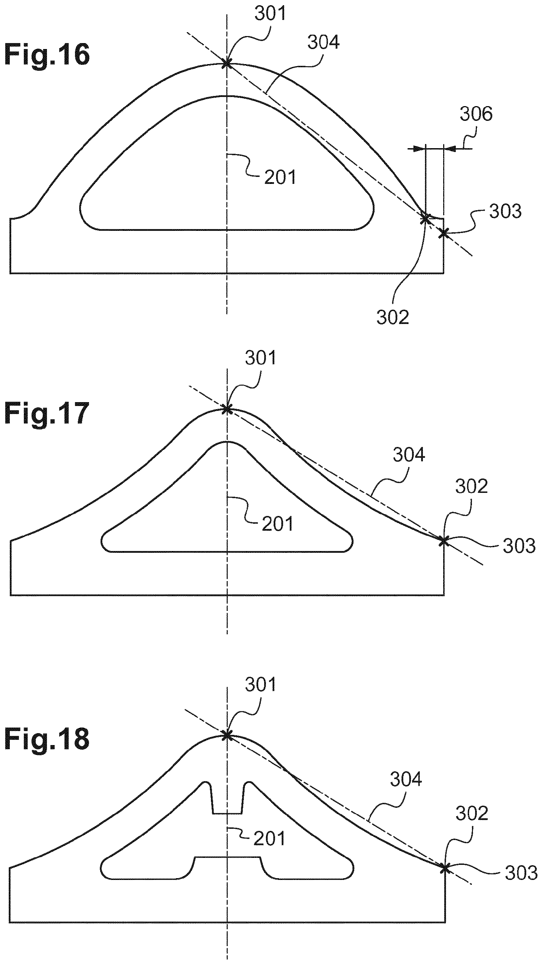

La figure 16 représente un profil pour lequel les flancs 11, 13 comprennent des parties convexes, ici courbées vers l'extérieur. Ceci facilite une déformation de la surface extérieure du flanc, ce qui améliore le décollage de la terre en fonctionnement. La convexité des flancs 11, 13 est limitée de sorte que la flèche de la forme convexe reste inférieure à la demi-épaisseur du flanc. Le flambement des flancs 11, 13 et l'affaissement brutal du profil sont ainsi évités.

La figure 17 représente un profil de pneumatique 1 pour lequel les flancs 11, 13 comprennent des parties concaves, ici courbées vers l'intérieur. Ceci facilite le décollage de la terre en fonctionnement. Vus de profil, les flancs 11, 13 sont, ici, généralement de forme parabolique. Cette forme parabolique des flancs 11, 13 entre la bande de roulement 5 et la semelle 3 permet en outre une déformation de l'enveloppe 6 dans laquelle la part de la composante axiale dans les efforts générés à proximité de la surface latérale 33 est élevée.

Le flambement du flanc et l'affaissement de la bande de roulement peuvent être limités par la mise en butée de la surface intérieure 55, par exemple contre la surface intérieure 35 de la semelle 3 ou contre des butées prévues à cet effet dans la chambre 7. Une variante du profil de la figure 17, pourvu de butées, est représentée en figure 18.

Les définitions géométriques du sommet 301, du point de jonction 302, du point de croisement 303, et de la droite 304 dans le profil du pneumatique visent à définir de manière structurelle une configuration de l'enveloppe 6 capable de se déformer de la manière indiquée plus haut. Un homme du métier comprendra que d'autres définitions, structurelles ou fonctionnelles, pourraient être considérées comme équivalentes pour définir la configuration du pneumatique.

Par exemple, un outil selon l'invention peut aussi être vu comme un pneumatique 1 comprenant une semelle 3 par l'intermédiaire de laquelle le pneumatique 1 se monte sur un support 101, une bande de roulement 5 opposée à la semelle 3 et deux flancs 11, 13 reliant la bande de roulement 5 à la semelle 3. La semelle 3, la bande de roulement 5 et les flancs 11, 13 forment conjointement une enveloppe 6 déformable. La bande de roulement 5 présente une forme généralement bombée. Les flancs 11, 13 sont généralement inclinés radialement. La forme bombée de la bande de roulement 5 et l'inclinaison des flancs 11, 13 sont telles que la déformation de l'enveloppe 6 sollicite la semelle 3 axialement et vers l'extérieur.

Dans le mode de réalisation de la figure 1, les pneumatiques 1 du rouleau 100 sont analogues les uns aux autres. En variante, des pneumatiques différents peuvent être montés ensemble et former un outil.

Dans les modes de réalisation décrits ci-avant, le plan médian 201 de chaque pneumatique 1 constitue également un plan de symétrie pour le pneumatique 1. En variante, certains au moins des pneumatiques peuvent être asymétriques. Par exemple, l'un au moins des pneumatiques disposés aux extrémités du support 101 peut présenter partiellement une forme spécifique, en particulier qui correspond à une forme du flasque 102 adjacent.

L'invention ne se limite pas aux exemples d'outils décrits ci-avant, seulement à titre d'exemple, mais elle englobe toutes les variantes que pourra envisager l'homme de l'art dans le cadre des revendications ci-après.

## Revendications

1. Outil agricole à usage pour former des sillons comprenant un support (201) généralement cylindrique et une pluralité de pneumatiques (1), chaque pneumatique (1) comprenant une semelle (3) par l'intermédiaire de laquelle le pneumatique (1) est monté sur le support (201), une bande de roulement (5) opposée à la semelle (3) et destinée à venir rouler sur le fond d'un sillon respectif lorsque l'outil travaille et ainsi que deux flancs (11, 13) reliant la bande de roulement (5) à la semelle (3), la semelle (3), la bande de roulement (5) et les flancs (11, 13) formant conjointement une enveloppe (6) uniforme sur une circonférence du pneumatique et déformable autour d'une chambre (7) qui communique fluidiquement avec l'extérieur du pneumatique (1), la semelle présentant une surface de siège (31) et une surface intérieure (35), opposée à la surface de siège (31) et s'étendant entre les flancs (11, 13), la bande de roulement (5) présentant une surface intérieure (52) dirigée vers la chambre (7) et une surface extérieure (51) opposée à la surface intérieure (52) et dirigée vers l'extérieur du pneumatique (1), la surface intérieure (52) de la bande de roulement (5) se trouvant en regard de la surface intérieure (35) de la semelle, la bande de roulement (5) de l'un au moins de la pluralité de pneumatiques (1) présente une forme généralement bombée, les flancs (11, 13) de ce pneumatique (1) sont généralement inclinés radialement, chacun des flancs (11, 13) présente une courbure de signe constant depuis la bande de roulement (3) jusqu'à la semelle (3), **caractérisé en ce que** la forme bombée de la bande de roulement (5) et l'inclinaison des flancs (11, 13) sont telles que la déformation de l'enveloppe (6) sollicite la semelle (5) axialement vers l'extérieur, une droite (304) passant par un sommet (301) de la bande de roulement (5) et par un point de jonction (302) entre un flanc (11, 13) et la semelle (3) croisant une surface latérale (33) de la semelle (3).

2. Outil agricole selon la revendication 1, dans lequel l'un au moins des flancs (11, 13) présente en outre une forme généralement concave et parabolique.

3. Outil agricole selon l'une des revendications précédentes, dans lequel le pneumatique (1) comprend en outre au moins une armature (9) logée dans la semelle (3), à proximité d'une jonction (52) avec un flanc (11 ; 13).

4. Outil agricole selon l'une des revendications précédentes, dans lequel le pneumatique (1) présente une hauteur de travail (203) supérieure à 28 % de la largeur (204) du pneumatique (1).

5. Outil agricole selon l'une des revendications précédentes, dans lequel l'un au moins des flancs (11, 13) se raccorde à la semelle (3) par l'intermédiaire d'un épaulement (37).

6. Outil agricole selon l'une des revendications précédentes, dans lequel la droite (304) croise la surface latérale (33) de la semelle (3) en une portion de la semelle (3) correspondant à une demi-épaisseur radialement extérieure de la semelle (3).

7. Outil agricole selon l'une des revendications précédentes, dans lequel la forme bombée de la bande de roulement (5) et l'inclinaison des flancs (11, 13) sont telles que la portion de la droite (304) s'étendant entre le sommet (301) de la bande de roulement (5) et le point de jonction (302) entre un flanc (11, 13) et la semelle (3) reste comprise dans l'épaisseur dudit flanc (11, 13).

8. Pneumatique (1) comprenant une semelle (3) par l'intermédiaire de laquelle le pneumatique (1) se monte sur un support (201), une bande de roulement (5) opposée à la semelle (3) et destinée à venir rouler sur le fond d'un sillon respectif lorsque l'outil travaille et ainsi que deux flancs (11, 13) reliant la bande de roulement (5) à la semelle (3), la semelle (3), la bande de roulement (5) et les flancs (11, 13) formant conjointement une enveloppe (6) uniforme sur une circonférence du pneumatique et déformable autour d'une chambre (7) qui communique fluidiquement avec l'extérieur du pneumatique (1), la semelle présentant une surface de siège (31) et une surface intérieure 35, opposée à la surface de siège (31) et s'étendant entre les flancs (11, 13), la bande de roulement (5) présentant une surface intérieure (52) dirigée vers la chambre (7) et une surface extérieure (51) opposée à la surface intérieure (52) et dirigée vers l'extérieur du pneumatique (1), la surface intérieure (52) de la bande de roulement (5) se trouvant en regard de la surface intérieure (35) de la semelle, la bande de roulement (5) présentant une forme généralement bombée, les flancs (11, 13) étant généralement inclinés radialement, la forme bombée de la bande de roulement (5) et l'inclinaison des flancs (11, 13) étant telles que la déformation de l'enveloppe (6) sollicite la semelle (5) axialement vers l'extérieur, une droite (304) passant par un sommet (301) de la bande de roulement (5) et par un point de jonction (302) entre un flanc (11, 13) et la semelle (3) croisant une surface latérale (33) de la semelle (3), tandis que chacun des flancs (11, 13) présente une courbure de signe constant depuis la bande de roulement (3) jusqu'à la semelle (3).

9. Kit comprenant un support (201) généralement cylindrique et au moins un pneumatique (1) comprenant une semelle (3) par l'intermédiaire de laquelle le pneumatique (1) se monte sur le support (201), une bande de roulement (5) opposée à la semelle (3) et destinée à venir rouler sur le fond d'un sillon respectif lorsque l'outil travaille et ainsi que deux flancs (11, 13) reliant la bande de roulement (5) à la semelle (3), la semelle (3), la bande de roulement (5) et les flancs (11, 13) formant conjointement une enveloppe (6) uniforme sur une circonférence du pneumatique et déformable autour d'une chambre (7) qui communique fluidiquement avec l'extérieur du pneumatique (1), la semelle présentant une surface de siège (31) et une surface intérieure (35), opposée à la surface de siège (31) et s'étendant entre les flancs (11, 13), la bande de roulement (5) présentant une surface intérieure (52) dirigée vers la chambre (7) et une surface extérieure (51) opposée à la surface intérieure (52) et dirigée vers l'extérieur du pneumatique (1), la surface intérieure (52) de la bande de roulement (5) se trouvant en regard de la surface intérieure (35) de la semelle, la bande de roulement (5) présentant une forme généralement bombée, les flancs (11, 13) étant généralement inclinés radialement, la forme bombée de la bande de roulement (5) et l'inclinaison des flancs (11, 13) étant telles que la déformation de l'enveloppe (6) sollicite la semelle (5) axialement vers l'extérieur, une droite (304) passant par un sommet (301) de la bande de roulement (5) et par un point de jonction (302) entre un flanc (11, 13) et la semelle (3) croisant une surface latérale (33) de la semelle (3), tandis que chacun des flancs (11, 13) présente une courbure de signe constant depuis la bande de roulement (3) jusqu'à la semelle (3).

## Patentansprüche

1. Ackerwerkzeug zur Verwendung, um Furchen zu bilden, das einen allgemein zylindrischen Träger (201) und eine Vielzahl von Reifen (1) umfasst, wobei jeder Reifen (1) eine Sohle (3), mittels der der Reifen (1) auf dem Träger (201) montiert ist, eine Lauffläche (5), die der Sohle (3) gegenüberliegt und dazu bestimmt ist, auf dem Boden einer jeweiligen Furche zu rollen, wenn das Werkzeug arbeitet, sowie zwei Flanken (11, 13) umfasst, die die Lauffläche (5) mit der Sohle (3) verbinden, wobei die Sohle (3), die Lauffläche (5) und die Flanken (11, 13) zusammen einen über einen Umfang des Reifens einheitlichen und verformbaren Mantel (6) um eine Kammer (7) bilden, die strömungstechnisch mit der Außenseite des Reifens (1) kommuniziert, wobei die Sohle eine Sitzfläche (31) und eine Innenfläche (35) aufweist, die der Sitzfläche (31) gegenüberliegt und sich zwischen den Flanken (11, 13) erstreckt, wobei die Lauffläche (5) eine Innenfläche (52) aufweist, die zur Kammer (7) gerichtet ist, und eine Außenfläche (51), die der Innenfläche (52) gegenüberliegt und zur Außenseite des Reifens (1) gerichtet ist, wobei sich die Innenfläche (52) der Lauffläche (5) der Innenfläche (35) der Sohle zugewandt befindet, wobei die Lauffläche (5) mindestens eines der Vielzahl von Reifen (1) eine allgemein gewölbte Form aufweist, die Flanken (11, 13) dieses Reifens (1) allgemein radial geneigt sind, jede der Flanken (11, 13) eine Krümmung mit konstantem Vorzeichen von der Lauffläche (3) bis zur Sohle (3) aufweist, **dadurch gekennzeichnet, dass**
die gewölbte Form der Lauffläche (5) und die Neigung der Flanken (11, 13) derart sind, dass die Verformung des Mantels (6) die Sohle (3) axial nach außen belastet, wobei eine Gerade (304), die durch einen Scheitelpunkt (301) der Lauffläche (5) und durch einen Verbindungspunkt (302) zwischen einer Flanke (11, 13) und der Sohle (3) verläuft, eine Seitenfläche (33) der Sohle (3) kreuzt.

2. Ackerwerkzeug nach Anspruch 1, wobei mindestens eine der Flanken (11, 13) weiter eine allgemein konkave und parabolische Form aufweist.

3. Ackerwerkzeug nach einem der vorstehenden Ansprüche, wobei der Reifen (1) weiter mindestens eine Armierung (9) umfasst, die in der Sohle (3) in der Nähe einer Verbindung (52) zu einer Flanke (11; 13) untergebracht ist.

4. Ackerwerkzeug nach einem der vorstehenden Ansprüche, wobei der Reifen (1) eine Arbeitshöhe (203) aufweist, die mehr als 28 % der Breite (204) des Reifens (1) beträgt.

5. Ackerwerkzeug nach einem der vorstehenden Ansprüche, wobei mindestens eine der Flanken (11, 13) mittels einer Schulter (37) an die Sohle (3) anschließt.

6. Ackerwerkzeug nach einem der vorstehenden Ansprüche, wobei die Gerade (304) die Seitenfläche (33) der Sohle (3) in einem Abschnitt der Sohle (3) schneidet, der einer halben radial äußeren Dicke der Sohle (3) entspricht.

7. Ackerwerkzeug nach einem der vorstehenden Ansprüche, wobei die gewölbte Form der Lauffläche (5) und die Neigung der Flanken (11, 13) derart sind, dass der Abschnitt der Geraden (304), der sich zwischen dem Scheitelpunkt (301) der Lauffläche (5) und dem Verbindungspunkt (302) zwischen einer Flanke (11, 13) und der Sohle (3) erstreckt, in der Dicke der Flanke (11, 13) umfasst bleibt.

8. Reifen (1), der eine Sohle (3), mittels der der Reifen (1) auf einem Träger (201) montiert wird, eine Lauffläche (5), die der Sohle (3) gegenüberliegt und dazu bestimmt ist, auf dem Boden einer jeweiligen Furche zu rollen, wenn das Werkzeug arbeitet, sowie zwei Flanken (11, 13) umfasst, die die Lauffläche (5) mit der Sohle (3) verbinden, wobei die Sohle (3), die Lauffläche (5) und die Flanken (11, 13) zusammen einen über einen Umfang des Reifens einheitlichen und verformbaren Mantel (6) um eine Kammer (7) bilden, die strömungstechnisch mit der Außenseite des Reifens (1) kommuniziert, wobei die Sohle eine Sitzfläche (31) und eine Innenfläche (35) aufweist, die der Sitzfläche (31) gegenüberliegt und sich zwischen den Flanken (11, 13) erstreckt, wobei die Lauffläche (5) eine Innenfläche (52) aufweist, die zur Kammer (7) gerichtet ist, und eine Außenfläche (51), die der Innenfläche (52) gegenüberliegt und zur Außenseite des Reifens (1) gerichtet ist, wobei sich die Innenfläche (52) der Lauffläche (5) der Innenfläche (35) der Sohle zugewandt befindet, wobei die Lauffläche (5) eine allgemein gewölbte Form aufweist, wobei die Flanken (11, 13) allgemein radial geneigt sind, wobei die gewölbte Form der Lauffläche (5) und die Neigung der Flanken (11, 13) derart sind, dass die Verformung des Mantels (6) die Sohle (3) axial nach außen belastet, wobei eine Gerade (304), die durch einen Scheitelpunkt (301) der Lauffläche (5) und durch einen Verbindungspunkt (302) zwischen einer Flanke (11, 13) und der Sohle (3) verläuft, eine Seitenfläche (33) der Sohle (3) kreuzt, während jede der Flanken (11, 13) eine Krümmung mit konstantem Vorzeichen von der Lauffläche (5) bis zur Sohle (3) aufweist.

9. Set, das einen allgemein zylindrischen Träger (201) und mindestens einen Reifen (1) umfasst, der eine Sohle (3), mittels der der Reifen (1) auf dem Träger (201) montiert wird, eine Lauffläche (5), die der Sohle (3) gegenüberliegt und dazu bestimmt ist, auf dem Boden einer jeweiligen Furche zu rollen, wenn das Werkzeug arbeitet, sowie zwei Flanken (11, 13) umfasst, die die Lauffläche (5) mit der Sohle (3) verbinden, wobei die Sohle (3), die Lauffläche (5) und die Flanken (11, 13) zusammen einen über einen Umfang des Reifens einheitlichen und verformbaren Mantel (6) um eine Kammer (7) bilden, die strömungstechnisch mit der Außenseite des Reifens (1) kommuniziert, wobei die Sohle eine Sitzfläche (31) und eine Innenfläche (35) aufweist, die der Sitzfläche (31) gegenüberliegt und sich zwischen den Flanken (11, 13) erstreckt, wobei die Lauffläche (5) eine Innenfläche (52) aufweist, die zur Kammer (7) gerichtet ist, und eine Außenfläche (51), die der Innenfläche (52) gegenüberliegt und zur Außenseite des Reifens (1) gerichtet ist, wobei sich die Innenfläche (52) der Lauffläche (5) der Innenfläche (35) der Sohle zugewandt befindet, wobei die Lauffläche (5) eine allgemein gewölbte Form aufweist, wobei die Flanken (11, 13) allgemein radial geneigt sind, wobei die gewölbte Form der Lauffläche (5) und die Neigung der Flanken (11, 13) derart sind, dass die Verformung des Mantels (6) die Sohle (5) axial nach außen belastet, wobei eine Gerade (304), die durch einen Scheitelpunkt (301) der Lauffläche (5) und durch einen Verbindungspunkt (302) zwischen einer Flanke (11, 13) und der Sohle (3) verläuft, eine Seitenfläche (33) der Sohle (3) kreuzt, während jede der Flanken (11, 13) eine Krümmung mit konstantem Vorzeichen von der Lauffläche (5) bis zur Sohle (3) aufweist.

## Claims

1. Agricultural tool for use in forming furrows, comprising a generally cylindrical support (201) and a plurality of tires (1), each tire (1) comprising a sole (3) by way of which the tire (1) is mounted on the support (201), a tread (5) opposite the sole (3) and intended to roll on the bottom of a respective furrow when the tool is working and two sidewalls (11, 13) that connect the tread (5) to the sole (3), the sole (3), the tread (5) and the sidewalls (11, 13) jointly forming a casing (6) that is uniform on a circumference of the tire and deformable around a chamber (7) that fluidly communicates with the outside of the tire (1), the sole having a seat surface (31) and an inner surface (35), opposite the seat surface (31) and extending between the sidewalls (11, 13), the tread (5) having an inner surface (52) directed towards the chamber (7) and an outer surface (51) facing away from the inner surface (52) of the tread (5) and directed towards the outside of the tire (1), the inner surface (52) of the tread (5) facing the inner surface (35) of the sole, the tread (5) of at least one of the plurality of tires (1) has a generally domed shape, the sidewalls (11, 13) of this tire (1) are generally inclined radially, each of the sidewalls (11, 13) has a curvature with constant sign from the tread (5) to the sole (3), **characterized in that** the domed shape of the tread (5) and the inclination of the sidewalls (11, 13) are such that the deformation of the casing (6) urges the sole (3) axially outward, a straight line (304) passing through a crown (301) of the tread (5) and through a junction point (302) between a sidewall (11, 13) and the sole (3) crossing a lateral surface (33) of the sole (3).

2. Agricultural tool according to claim 1, wherein at least one of the sidewalls (11, 13) furthermore has a generally concave and parabolic shape.

3. Agricultural tool according to one of the preceding claims, wherein the tire (1) furthermore comprises at least one reinforcement (9) housed in the sole (3), close to a junction (52) with one sidewall (11; 13).

4. Agricultural tool according to one of the preceding claims, wherein the tire (1) has a working height (203) greater than 28% of the width (204) of the tire (1).

5. Agricultural tool according to one of the preceding claims, wherein at least one of the sidewalls (11, 13) is connected to the sole (3) by way of a shoulder (37).

6. Agricultural tool according to one of the preceding claims, wherein the straight line (304) crosses the lateral surface (33) of the sole (3) in a portion of the sole (3) that corresponds to a radially outer half thickness of the sole (3).

7. Agricultural tool according to one of the preceding claims, wherein the domed shape of the tread (5) and the inclination of the sidewalls (11, 13) are such that the portion of the straight line (304) that extends between the crown (301) of the tread (5) and the junction point (302) between a sidewall (11, 13) and the sole (3) remains within the thickness of said sidewall (11, 13).

8. Tire (1) comprising a sole (3) by way of which the tire (1) is to be mounted on a support (201), a tread (5) opposite the sole (3) and intended to roll on the bottom of a respective furrow when the tool is working and two sidewalls (11, 13) that connect the tread (5) to the sole (3), the sole (3), the tread (5) and the sidewalls (11, 13) jointly forming a casing (6) that is uniform on a circumference of the tire and deformable around a chamber (7) that fluidly communicates with the outside of the tire (1), the sole having a seat surface (31) and an inner surface (35), opposite the seat surface (31) and extending between the sidewalls (11, 13), the tread (5) having an inner surface (52) directed towards the chamber (7) and an outer surface (51) facing away from the inner surface (52) and directed towards the outside of the tire (1), the inner surface (52) of the tread (5) facing the inner surface (35) of the sole, the tread (5) having a generally domed shape, the sidewalls (11, 13) being generally inclined radially, the domed shape of the tread (5) and the inclination of the sidewalls (11, 13) being such that the deformation of the casing (6) urges the sole (3) axially outward, a straight line (304) passing through a crown (301) of the tread (5) and through a junction point (302) between a sidewall (11, 13) and the sole (3) crossing a lateral surface (33) of the sole (3) while each of the sidewalls (11, 13) has a curvature with constant sign from the tread (5) to the sole (3).

9. Kit comprising a generally cylindrical support (201) and at least one tire (1) comprising a sole (3) by way of which the tire (1) is to be mounted on the support (201), a tread (5) opposite the sole (3) and intended to roll on the bottom of a respective furrow when the tool is working, and two sidewalls (11, 13) that connect the tread (5) to the sole (3), the sole (3), the tread (5) and the sidewalls (11, 13) jointly forming a casing (6) that is uniform on a circumference of the tire and deformable around a chamber (7) that fluidly communicates with the outside of the tire (1), the sole having a seat surface (31) and an inner surface (35), opposite the seat surface (31) and extending between the sidewalls (11, 13), the tread (5) having an inner surface (52) directed towards the chamber (7) and an outer surface (51) facing away from the inner surface (52) and directed towards the outside of the tire (1), the inner surface (52) of the tread (5) facing the inner surface (35) of the sole, the tread (5) having a generally domed shape, the sidewalls (11, 13) being generally inclined radially, the domed shape of the tread (5) and the inclination of the sidewalls (11, 13) being such that the deformation of the casing (6) urges the sole (3) axially outward, a straight line (304) passing through a crown (301) of the tread (5) and through a junction point (302) between a sidewall (11, 13) and the sole (3) crossing a lateral surface (33) of the sole (3) while each of the sidewalls (11, 13) has a curvature with constant sign from the tread (5) to the sole (3).
